# EUROPEAN PATENT SPECIFICATION

(11) **EP 2 517 931 B1**
(45) Date of publication and mention of the grant of the patent: **06.07.2016**
(21) Application number: 12275043.3
(22) Date of filing: 10.04.2012
(51) Int. Cl.: B60R 1/10, B60R 1/12

(54) **Vehicle mirror system**
Fahrzeugspiegelsystem
Système de rétroviseur de véhicule

(30) Priority: 08.04.2011 GB 201105952; 11.01.2012 GB 201200381
(43) Date of publication of application: 31.10.2012
(73) Proprietor: Thomas, Melvin, Lichfield, Staffordshire WS14 9BU (GB)
(72) Inventor: Thomas, Melvin, Lichfield, Staffordshire WS14 9BU (GB)
(74) Representative: Parnham, Kevin

(56) References cited:
- EP-A2- 1 391 348
- WO-A1-96/04152
- WO-A1-02/062621
- DE-A1-102004 028 113
- GB-A- 2 261 643
- US-A- 2 059 418
- US-A- 6 059 418
- US-A- 6 104 538
- US-A1- 2009 174 958

## Description

The present invention relates to motor vehicles and more particularly mirrors for vehicles, in particular 'wing' mirrors or 'rear-view' mirrors.

Wing mirrors are mounted on the exterior of the vehicle door, often on the 'A' pillar or post or door frame. Some wing mirrors include so-called 'blind spot' portions to increase the driver's field of vision; wing mirrors may also have integral indicator lights to increase the visibility of indicator signals for pedestrians and oncoming vehicles; wing mirrors that can be repositioned electronically; and wing mirrors can be folded In to protect them when the vehicle is parked. Conventional wing mirrors are below the driver's eye level.

Rear-view mirrors are mounted centrally inside the vehicle and normally adjacent to or on the top edge of a windscreen and on the opposite side to the driver with regard to one wing mirror and the between the far wing mirror and the driver. Rear-view mirrors are designed to break in such a way that injury to the vehicle occupants is minimised if they are thrown into the mirror In the event of a collision. Recent improvements to rear-view mirrors include auto-dimming features to reduce glare. Current rear-view mirrors are placed above the driver's eye level. For a current rear-view mirror to be effective, the line of vision between the rear-view mirror and the rear windscreen must be clear of obstructions, which may be caused by the vehicle occupants or excessive luggage. In lorries and vehicles with trailers, the line of vision is blocked so the driver depends on the wing mirrors.

US6059418 discloses a vehicle with a mirror system comprising a viewing mirror associated, in use, with an image mirrors through an optical path to a driver to form a composite image in the viewing mirror comprising image parts from each image mirror and the viewing mirror, each image part being different and defined by an individual reflection path to the viewing mirror then along the optical path to the driver in use.

It will be understood that the various positions of the mirrors mean that a driver's vision and focus must move about the cabin of a vehicle which can be tiring on long journeys and combined with a need to check instrument dials etc. as well as drive the vehicle can lead to distraction and possibly accidents.

In order to overcome the above incoveniences, a motor vehicle according to claim 1 is proposed.

The viewing mirror may be attached to the side of the vehicle using a hinge or other mounting means.

The viewing mirror and/or the mirror system as a whole may also be electronically linked to a seat positioning system, such that it is automatically adjusted to the correct position for a driver once their desired seating position is selected.

The mirror system may incorporate other features such as integrated indicator lights; a folding mechanism to prevent damage when the vehicle is parked: mirror systems that can be repositioned electronically; and auto-dimming features to reduce glare.

The mirror system may include:
(a) normal vision mirrors
(b) distance vision mirrors
(c) blind spot mirrors

The viewing mirror and at least some of the Image mirror are separate elements secured at different parts of a vehicle to provide respective optical paths through to the viewing mirror as seen by the driver.

The viewing mirror and/or the image mirror may be adjustable relative to each other. Alignment and/or angles between the viewing mirror and/or the image mirror may be adjustable. The viewing mirror and/or the image mirror may be located on adjustable mountings.

The optical path may be line of sight. The optical path may include reflection Incident angles.

The viewing mirror may be curved and/or angled and/or include areas of variable reflectivity.

The image mirror may be curved and/or angled and/or include areas of variable reflectivity.

The image parts may have a ghost identifier. The ghost identifier may be a letter or a number.

The image may include opaque or otherwise distinguishable divider bands between the image parts.

The viewing mirror and/or image mirror may have a sensor that can detect the speed of other vehicles relative to the vehicle on which the viewing mirror and/or image mirror are mounted in order that the driver may be alerted to the presence of speeding vehicles, for example, emergency vehicles.

In order that the invention in all its aspects may be illustrated, more easily explained and readily carried into effect by those skilled in the art, embodiments thereof will now be described purely by way of non-limiting example with reference to the accompanying drawings, and in which:
Figure 1 is a schematic plan representation of a first embodiment of a mirror system attached to a motor vehicle;
Figure 2 is a schematic front representation of a viewing mirror in accordance with aspects of the present invention;
Figure 3 is a schematic plan representation of a second embodiment of a mirror system in accordance with aspects of the present invention;
Figure 4 is schematic side image of part of the system as represented in figure 3;
Figure 5 is a schematic side view of a viewing mirror integrally formed with a vehicle door in accordance with an embodiment of a third aspect of the invention;
Figure 6 is a front schematic perspective view of the embodiment shown in Figure 5;
Figure 7 is a upper side perspective view of the embodiment shown in Figures 5 and 6;
Figure 8 is a front view of the viewing mirror of Figures 5 to 7 showing a plurality of viewing mirror parts forming the viewing mirror;
Figure 9 is a side cross-section of the viewing mirror parts shown in Figure 8;
Figure 10 is a plan cross- section of the viewing mirror parts shown in Figures 8 and 9;
Figure 11 schematic side view of a viewing mirror integrally formed with an A post of a vehicle in accordance with a fourth embodiment of aspects of the present invention; and,
Figures 12a to 12c are schematic front, side cross-section and plan cross-section representations respectively of a plurality of mirror parts forming a viewing mirror in accordance with the fourth embodiment of the invention depicted in figure 11.

Visibility is very important when driving a motor vehicle as well as keeping actual control of the vehicle but there may be a number of distractions including operation of in-car entertainment systems, mobile phones as well as lights. A/C systems etc. A need to look at several mirrors to obtain an overall view around a vehicle in motion would be an additional burden upon a driver.

Aspects of the present invention are directed to providing a consolidated or composite image to a driver at a single viewing position in the form of a viewing mirror normally located on an A or wind pillar or post or door of a vehicle. The viewing mirror may even provide the structure of the A or wind pillar or part of the window frame of a door by having a transparent inner surface towards the driver.

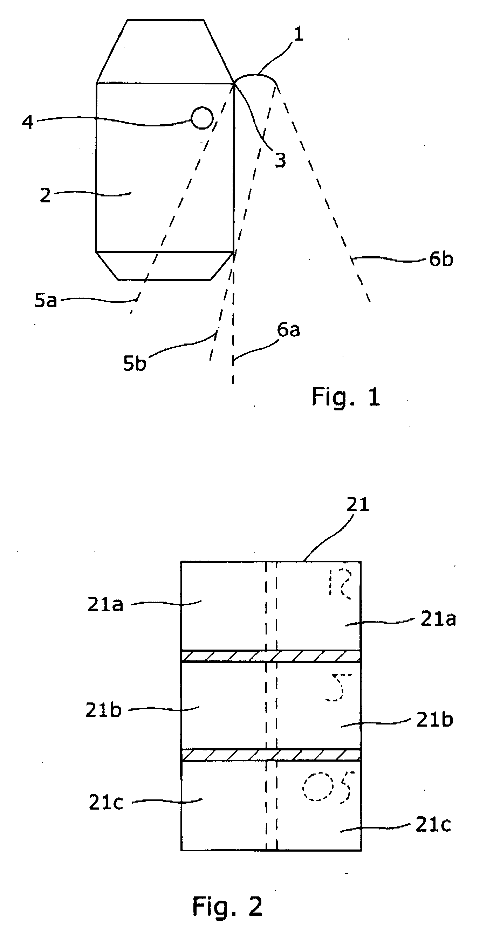

Figure 1 provides a schematic plan representation or illustration of a mirror system in accordance with aspect of the present invention. The system includes a viewing mirror 1 secured to the structure of a vehicle 2 in the illustration about an A post so that a driver notionally positioned at 4 can see a number of distinct images from angles about the vehicle. These distinct images are represented in Figure 1 by broken lines 5, 6. In the viewing mirror these distinct images will be provided in different sections which may be denoted by variations in curvature or angles or reflectivity in different image mirror parts of the viewing mirror 1 or combinations of these features in one image mirror zone. In such circumstances the viewing mirror and the image mirrors can be one in the same integral unit with the whole defining respective optical paths for the images to the driver at position 4.

The viewing mirror will normally be mounted on an adjustable mounting so that the angle of presentation of the whole mirror 1 or parts of the mirror 1 relative to the driver or relative to other parts of the mirror can be adjusted to alter the composite image presented to the driver at 4. It will also be appreciated that a seat for the driver may include a sensor as well as possibly other sensors for driver eye level and positioning/posture to automatically adjust the mirror system for such factors.

Figure 2 provides a schematic illustration of a viewing mirror 21 in accordance with aspects of the present invention as seen by a driver. The viewing mirror 21 has several zones 21a, 21b. 21c each showing an image part to produce the composite image seen by the driver. In the first embodiment depicted in Figure 1 each zone 21a, 21 b, 21 c is the equivalent of an image mirror for each particular area around the motor vehicle. Thus, the zones 21 a, 21b, 21 c can be created by curvature or angle or variations in reflectivity in the mirror 21 itself. As will be described later the zones in a second embodiment may more simply act as a surface upon which the composite image is displayed for sight by the driver. In such circumstances each zone 21a, 21b, 21c will have an optical path to an image mirror deployed and located elsewhere on the vehicle such that reflections into the image mirror are in turn reflected to the viewing mirror and on towards to be seen by the driver.

It will be understood that the areas or zones 21a, 21b, 21c of the viewing mirror which provide the composite image there on might be confusing if they all blurred into each other particularly as the images will be moving Thus, to provide distinction opaque or readily distinguishable bands 22, 23 will be provided in the viewing mirror to delimit each zone or area 21a, 21 b, 21 c. The bands 22, 23 may simply be blackened strips across the viewing mirror or edges of parts of the mirror.

As can be seen In figure 2 the image mirror in a mirror system in accordance with aspects of the present invention is longer in an upright direction in comparison with its width. Thus, several zones 21a, 21b, 21c can be provided all about a driver's eye level stacked one upon the other. Alternatively, and if possible with optical paths, vertical stripes of image parts may be provide or a stack with two side-by-side areas 21a & 21¹a, 21b & 21¹b & 21c &21¹c to give six zones in total. It will be appreciate that to give that number of Images previously would require provision of cameras and displays.

As will be understood a driver may become confused by the number of image parts available but in accordance with aspects of the present invention it may be possible to effectively switch off an image part by displacing that image part out of the composite image by alteration of the mountings as described previously. This adjustment may be manual or automatic using a controller. Adjustment may be carried out manually when the vehicle is stationary, and automatically when the vehicle is moving, for example.

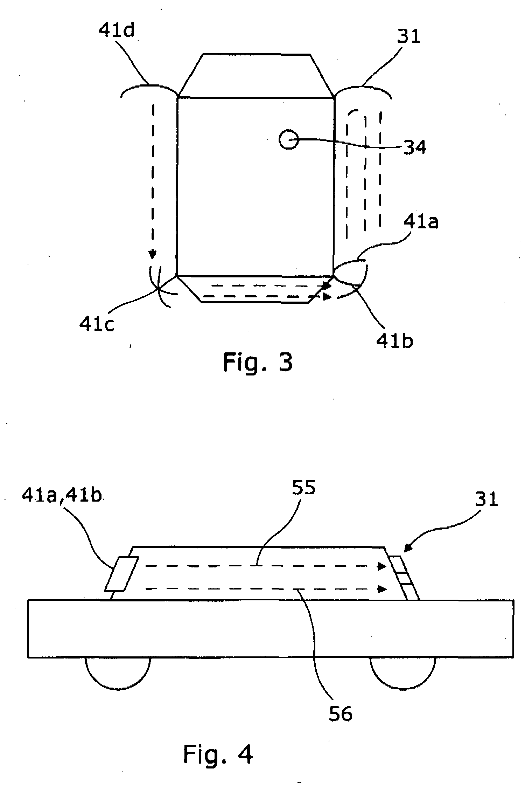

Provision of a composite image is part of aspects of the present invention so as depicted In Figure 3 a composite image in a viewing mirror 31 can be seen by a driver at a position 34 using reflected images from image mirrors 41 at different heights, curvatures and reflectivity levels. The respective image parts provided by image mirrors 41 can be augmented by an image part or parts provided at the viewing mirror 31.

The image mirrors 41a, 41 b respectively face back and reflected back toward the viewing mirror 31 and a substantially right angles to interact with other image mirrors 41c which in turn may be a stack of different curvature mirrors to view the rear of the vehicle and the other side of the vehicle by back reflection from a further image mirror 41 d. The broken lines shown in figure 3 are intended to illustrate the various optical paths and reflection paths to the viewing mirror 31 that are necessary to provide the composite image as seen by a driver at position 34.

As will be understood by those skilled in the technology the mirrors 31, 41 in terms of their position, curvature, relative and absolute angles and other factors such as levels of illumination will require a control module. Manipulation and adjustment of so many factors will normally be beyond manual adjustment. Thus the controller or control module will use sensors to note driver position etc. then using appropriate mountings adjusts angles, curvature and reflectivity to provide a composite image as required. Furthermore, the control module will possibly provide or adjust illumination levels through control of lighting about a vehicle as required.

Figure 4 provides a schematic side view of part of the mirror system described above with regard to figure 3 to illustrate how image parts are projected and reflected to the viewing mirror 31 and on to a driver along respective optical paths. As can be seen Image mirrors 41a. 41b are provided so that each mirror 41a, 41b projects by reflection respective image parts along broken lines 55, 56 to part of the viewing mirror 31. These image parts are combined in a composite image with an image part solely as a result of the viewing mirror 31 alone in the composite image as seen by the driver in use. In such circumstances, various parts and areas around the vehicle can be viewed simply by looking at the viewing mirror 31 without a need to move their gaze abound a vehicle to find various images.

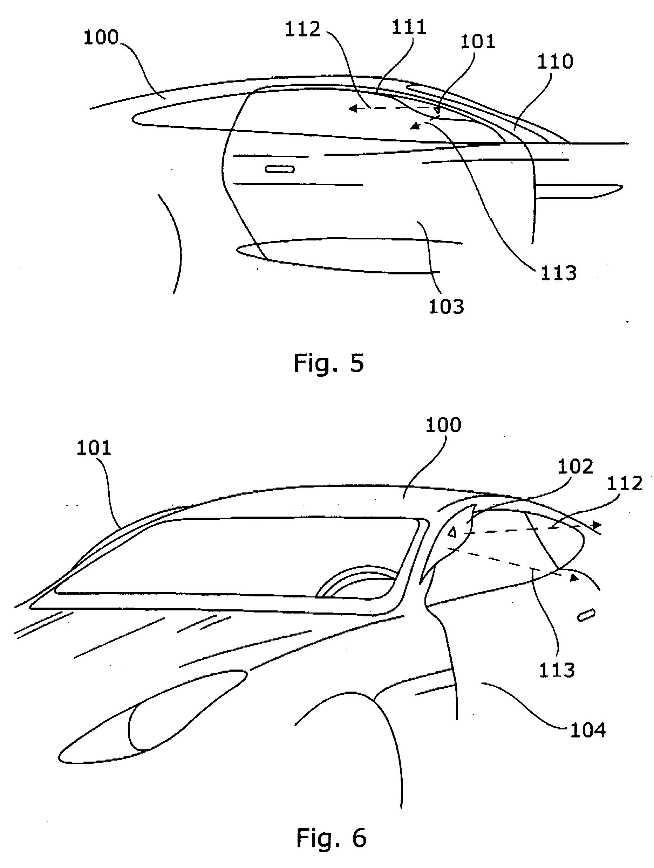

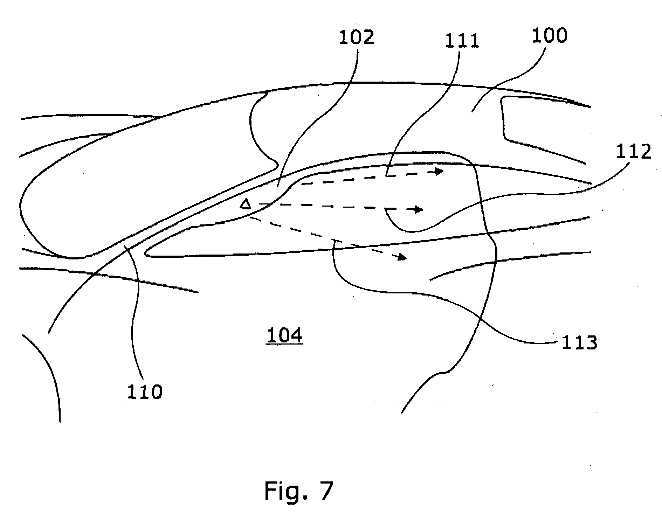

Figures 5 to 7 illustrate a third embodiment of a mirror system in accordance with aspects of the present invention.

A mounting 101, 102 is provided in a window frame portion of a respective door 103, 104. The mounting 101, 102 is fixed to the door and integrally formed with the door to allow mirror parts to be secured in the mounting 101, 102. The mounting 101, 102 will extend over and "hood" part of the window so that the mirror parts can be viewed in use through the transparent window.

The mirror parts will be shaped by configuration, that is to say, by angle and/or curvature and/or size at least to provide different areas of view schematically depicted by arrow heads 111, 112, 113. The areas of view 111, 112, 113, are directed to different zones about vehicle 100 and may be in an optical path with image mirrors located about the vehicle. This means that a driver positioned within the vehicle can see different or wider areas about the vehicle 100.

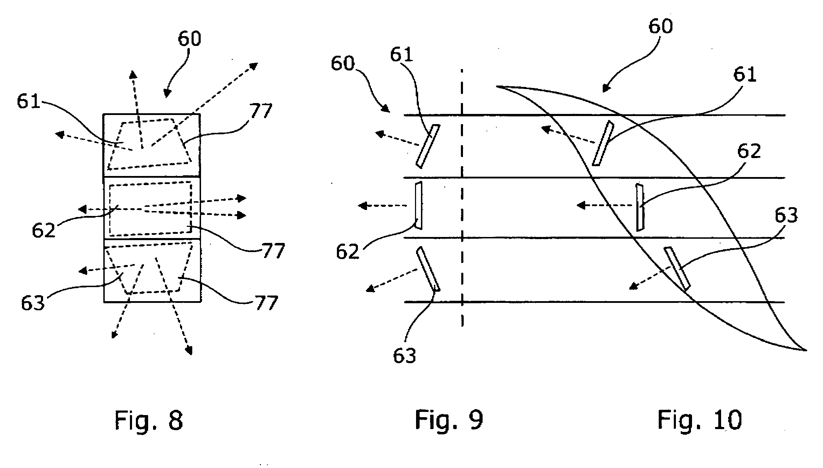

Figures 8 to 10 illustrate a mounting 60 including mirror parts 61, 62, 63 in accordance with embodiments of a third aspect of the invention. The mirror parts are individually shaped and configured to provide image parts 77 (show in shadow) from different zones around a vehicle or reflected from other image mirror parts associated with the vehicle. The mirror parts 61, 62, 63 can be flat or curved or domed, for example, and fitted upon mountings to have different incident fields of view if required by a driver. Each mirror part 61, 62, 63 will be individually adjustable by an adjuster mechanism for tilt or changes in curvature. The adjuster mechanism may be manually operated, or controlled centrally by a processor depending upon a driver's detected or control requirements.

The arrowheads in Figures 8 to 10 illustrate fields of view. These fields of view can be switched into the composite image seen by a driver and relative to each other as required by prevailing driving conditions.

It will be understood that the conventional rear view mirror of a vehicle may no longer be required when using a mirror system in accordance with embodiments of the invention.

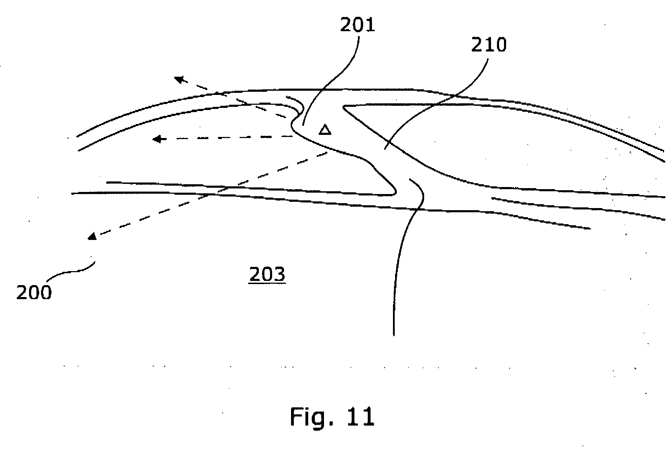

Figure 11 Illustrates a fourth embodiment of a mirror system in accordance with aspects of the invention. The fourth embodiment is similar to the third embodiment described above with reference to Figures 5 to 10. In this embodiment, however, a mounting 201 is integral with an A or window pillar or post of a vehicle 200. This means that, rather than pivoting with the door 203 of the vehicle 200, the mounting is resiliently and stably fixed. The mounting 201 will tend to extend more laterally away from the vehicle and extend/overlap the window of the door 203. The driver can view mirror element through the window and the greater stability may allow wider extension and so may allow a greater range of image fields to be viewed by the driver about the vehicle 200.

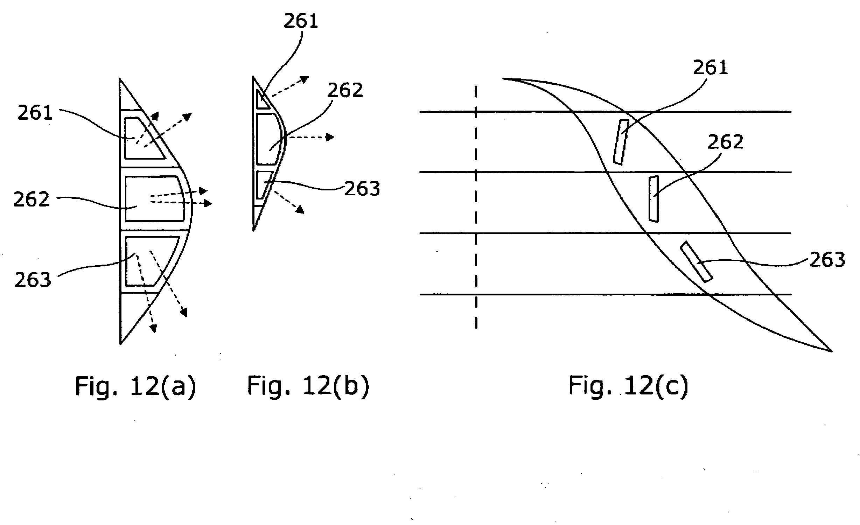

Figures 12a to 12c Illustrates similar mirror parts 261, 262, 263 to those shown in Figures 8 to 10 but with different angles and other configurations due to the different position on the A post and different width of the mounting 201.

Modifications and alterations with regard to aspects of the present invention will be understood by persons skilled in the art. For example, each mirror part may be changeable and have a distinct edge for definition.

Typically, the viewing mirror and possibly the image mirrors will have one or more of the of the following :- anti-glare coatings to dim the image presented to a driver, an auto cleaning coating to maintain a clear image, a heater to clear condensation, and a sensor for other vehicle speeds and positions as a detector for potential collisions. The mirror system, through mountings, with generally include lamps or similar devices to act as turning indicators for the vehicle. Parts of the mirror system may be arranged to fold towards a vehicle when parking to diminish the possibility of collisions.

## Claims

1. A motor vehicle (2, 200) with a mirror system comprising a single external viewing mirror (1, 21, 31, 61, 62, 261, 262, 283) associated, in use, with a plurality of image mirrors (6, 6, 77, 41) through a respective optical path to the viewing mirror to be seen in use by a driver (4) to form a composite image in the viewing mirror comprising image parts from each image mirror and the viewing mirror, each image part being different and defined by an individual external reflection path to the viewing mirror then along the external optical path to be seen by the driver in use, the viewing mirror is integrated within the upper part of an 'A' pillar or door (103, 104, 203) of the vehicle, at least one image mirror provides part of Its reflection in the optical path substantially aligned directly across a rear of the vehicle and at least one external optical path includes reflection between at least two image mirrors before the viewing mirror wherein at least the viewing mirror is an integral part of the vehicle A pillar or door, the mirror system longer, in an upright direction, in comparison with its width, with several zones provided all about a driver's eye level, stacked on top of one another.

2. A vehicle as claimed in Claim 1 wherein the viewing mirror is mounted on a mounting (101, 102, 103) for adjustment to allow positioning at the driver's eye level.

3. A vehicle as claimed in Claim 1 or Claim 2 wherein part of the mirror system is attached by a hinge or other mounting means.

4. A vehicle as claimed in any preceding claim comprising integrated indicator lights within the viewing mirror and/or at least one image mirror.

5. A vehicle as claimed in any preceding claim comprising a folding mechanism associated with the viewing mirror and/or at least one image mirror to prevent damage when the vehicle is parked.

6. A vehicle as claimed in any preceding claim wherein the viewing mirror and/or at least one image mirror are upon a mounting to allow tilt or variable curvature of the viewing mirror and/or the image mirror in use.

7. A vehicle as claimed in any preceding claim wherein at least the viewing mirror has an anti-glare coating to dim glare in the composite image.

8. A vehicle as claimed in any preceding claim wherein at least one viewing mirror and/or image mirror has a self cleaning surface to maintain the individual reflection path.

9. A vehicle as claimed in any preceding claim wherein at least one viewing mirror/image mirror has a heater for removal of ice in order to maintain the individual reflection path.

10. A vehicle as claimed in any preceding claim wherein the viewing mirror and/or image mirror have a sensor that can detect the speed of other vehicles relative to the vehicle on which the viewing mirror and/or image mirror are mounted whereby using a controller the viewing mirror and/or at least one image mirror can be adjusted to alter the individual reflection path for the image part along the optical path to the driver.

## Patentansprüche

1. Ein Kraftfahrzeug (2, 200) mit einem Spiegelsystem mit einem einzigen externen Betrachtungsspiegel (1, 21, 31, 61, 62, 261, 262, 263) zugeordnet ist, im Gebrauch mit einer Vielzahl von Bild Spiegel (5 77, 6, 41) über einen jeweiligen optischen Pfad zu dem Betrachtungsspiegel durch einen Fahrer in Gebrauch zu sehen (4) ein zusammengesetztes Bild in dem Betrachtungsspiegel mit Bildteile aus jedem Bild Spiegel und dem Betrachtungsspiegel zu bilden, wobei jedes Bild Teil verschieden ist und der durch einen einzelnen externen Reflexionsweges zum Beobachtungsspiegel dann entlang der externen optischen Pfad durch den Fahrer in Betrieb zu sehen, der Betrachtungsspiegel im oberen Teil einer A-Säule oder einer Tür integriert (103, 104, 203) des Fahrzeugs, zumindest einen Bildspiegel liefert in dem optischen Weg im wesentlichen ausgerichtet direkt über einem hinteren Teil des Fahrzeugs und mindestens einen externen optischen Pfad enthält Reflexion zwischen mindestens zwei Bild Spiegel vor dem Betrachtungsspiegel seines Reflexionsteil wobei zumindest die Sichtspiegel ein integraler Bestandteil des Fahrzeugs A-Säule oder Tür, das Spiegelsystem mehr, in einer aufrechten Richtung, im Vergleich zu seiner Breite mit mehreren Zonen alles über ein Fahreraugenhöhe zur Verfügung gestellt, auf der Spitze eines gestapelt eine andere.

2. Ein Fahrzeug wie in Anspruch 1 beansprucht, wobei der Betrachtungsspiegel auf einer Halterung (101, 102, 103) angebracht ist, die Positionierung zu ermöglichen, für die Einstellung auf Augenhöhe des Fahrers.

3. Ein Fahrzeug wie in Anspruch 1 oder Anspruch 2, wobei Systemteil des Spiegels durch ein Gelenk oder andere Befestigungsmittel angebracht ist.

4. Fahrzeug nach einem der vorhergehenden Ansprüche mit integrierten Anzeigeleuchten innerhalb des Betrachtungsspiegel und / oder zumindest einen Bildspiegel aufweist.

5. Fahrzeug nach einem der vorhergehenden Ansprüche mit einem Klappmechanismus, die mit dem Betrachtungsspiegel und / oder zumindest einen Bildspiegel umfasst Beschädigung zu verhindern, wenn das Fahrzeug geparkt ist.

6. Fahrzeug nach einem der vorhergehenden Ansprüche, wobei der Sichtspiegel und / oder zumindest einen Bildspiegel sind auf eine Neigung oder variable Krümmung des Betrachtungsspiegel zu ermöglichen, die Montage und / oder der Bildspiegel in Gebrauch.

7. Fahrzeug nach einem der vorhergehenden Ansprüche, wobei zumindest der Betrachtungsspiegel mit einer Antiblendbeschichtung aufweist Blendung in dem zusammengesetzten Bild zu verdunkeln.

8. Fahrzeug nach einem der vorhergehenden Ansprüche, wobei mindestens ein Sichtspiegel und / oder Bild Spiegel eine selbstreinigende Oberfläche, um die einzelnen Reflexionspfad beizubehalten hat.

9. Fahrzeug nach einem der vorhergehenden Ansprüche, wobei mindestens ein Sichtspiegel / Bild Spiegel eine Heizvorrichtung zum Entfernen von Eis, um die einzelnen Reflexionspfad zu halten hat. auf dem der Blickspiegel und / oder Bild Spiegel montiert sind, wobei mit Hilfe einer Steuerung

10. Fahrzeug nach einem der vorhergehenden Ansprüche, wobei der Sichtspiegel und / oder Bildspiegel einen Sensor aufweisen, der die Geschwindigkeit der anderen Fahrzeuge relativ zu dem Fahrzeug erfassen kann, der Blickspiegel und / oder mindestens einen Bildspiegel kann eingestellt werden, um die einzelnen Reflexionspfad für den Bildteil , um den Fahrer entlang des optischen Weges zu ändern.

## Revendications

1. Un véhicule à moteur (2, 200) avec un système de miroir comprenant un seul miroir externe de visualisation (1, 21, 31, 61, 62, 261, 262, 263) associé, en utilisation, avec une pluralité de miroirs d'image (5 , 6, 77, 41) par l'intermédiaire d'un trajet optique respectif vers le miroir de visualisation pour être vu en cours d'utilisation par un conducteur (4) pour former une image composite dans le miroir de visualisation comportant des parties d'image à partir de chaque image miroir et le miroir de visualisation, chaque image une partie étant différente et définie par un chemin de réflexion extérieure individuelle du miroir de visualisation, puis le long du trajet optique externe pour être vu par le conducteur en cours d'utilisation, le miroir de visualisation est intégré dans la panartie supérieure d'un montant «A» ou de porte (103, 104, 203) du véhicule, au moins un miroir d'image présente une partie de sa réflexion sur le trajet optique sensiblement aligné directement à travers une partie arrière du véhicule et au moins un trajet optique externe comprend une réflexion entre au moins deux miroirs d'image devant le miroir de visualisation dans lequel au moins le miroir de visualisation est une partie intégrante du véhicule, un pilier ou une porte, le système de miroir plus long, dans une direction verticale, par rapport à sa largeur, avec plusieurs zones prévues tout sur le niveau des yeux du conducteur, empilées les unes sur les un autre.

2. Véhicule selon la revendication 1, dans lequel le miroir de visualisation est monté sur un support (101, 102, 103) de réglage pour permettre le positionnement au niveau des yeux du conducteur.

3. Véhicule selon la revendication 1 ou la revendication 2, dans lequel une partie du système de miroir est fixé par une charnière ou un autre moyen de fixation.

4. Véhicule selon l'une quelconque des revendications précédentes, comprenant voyants lumineux intégrés dans le miroir de visualisation et / ou d'au moins un miroir de l'image.

5. Véhicule selon l'une quelconque des revendications précédentes, comprenant un mécanisme de pliage associé au miroir de visualisation et / ou d'au moins un miroir de l'image pour éviter tout dommage lorsque le véhicule est stationné.

6. Véhicule selon l'une quelconque des revendications précédentes, dans lequel le miroir de visualisation et / ou au moins une image miroir sont sur un support pour permettre l'inclinaison ou une courbure variable du miroir de visualisation et / ou le miroir de l'image en cours d'utilisation.

7. Un véhicule selon l'une quelconque des revendications précédentes, dans lequel au moins le miroir de visualisation comporte un revêtement anti-reflets pour assombrir les reflets dans l'image composite.

8. Véhicule selon l'une quelconque des revendications précédentes, dans lequel au moins un miroir de visualisation et / ou le miroir d'image comporte une surface auto-nettoyante pour maintenir le trajet de réflexion individuelle.

9. Véhicule selon l'une quelconque des revendications précédentes, dans lequel au moins un miroir de visualisation / image miroir présente un dispositif de chauffage pour le retrait de la glace afin de maintenir la trajectoire de réflexion individuelle.

10. Véhicule selon l'une quelconque des revendications précédentes, dans lequel le miroir de visualisation et / ou le miroir d'image possèdent un capteur qui peut détecter la vitesse d'autres véhicules par rapport au véhicule sur lequel le miroir de visualisation et / ou le miroir d'image sont montées de sorte que l'aide d'un dispositif de commande le miroir de visualisation et / ou d'au moins un miroir de l'image peut être ajustée pour modifer la trajectoire de réflexion individuelle pour la partie d'image le long du trajet optique vers le conducteur.
